# NEUE EUROPÄISCHE PATENTSCHRIFT

(11) **EP 3 204 815 B2**
(45) Veröffentlichungstag und Bekanntmachung des Hinweises auf die Entscheidung über den Einspruch: **19.01.2022**
(45) Hinweis auf die Patenterteilung: 02.01.2019
(21) Anmeldenummer: 15771600.2
(22) Anmeldetag: 01.10.2015
(51) Int. Cl.: G02B 21/36

(54) **MIKROSKOP MIT ÜBERDIMENSIONIERTEM ZOOMSYSTEM**
MICROSCOPE WITH OVERSIZED ZOOM SYSTEM
MICROSCOPE À SYSTÈME DE ZOOM SURDIMENSIONNÉ

(30) Priorität: 06.10.2014 DE 102014114467
(43) Veröffentlichungstag der Anmeldung: 16.08.2017
(73) Patentinhaber: Leica Microsystems (Schweiz) AG, 9435 Heerbrugg (CH)
(72) Erfinder: SCHNITZLER, Harald, CH-9450 Lüchingen (CH); HEEB, Rouven, CH-9473 Gams (CH)
(74) Vertreter: Schaumburg und Partner Patentanwälte mbB
(86) Internationale Anmeldenummer: PCT/EP2015/072657
(87) Internationale Veröffentlichungsnummer: WO 2016/055335

(56) Entgegenhaltungen:
- EP-A2- 2 131 224
- DE-A1- 10 214 191
- DE-A1-102009 012 707
- DE-A1-102010 045 860
- US-A1- 2005 168 809
- US-A1- 2006 114 554

## Beschreibung

Die Erfindung betrifft ein Mikroskop, das ein Objektivsystem sowie ein Zoomsystem mit einem Gesamt-Zoombereich aufweist. Das Objektivsystem umfasst mindestens zwei wahlweise in den Strahlengang einbringbare Objektive mit unterschiedlichen Brennweiten. Die Gesamtvergrößerung eines zu mikroskopierenden Objektes ergibt sich hierbei jeweils aus der Brennweite des gewählten Objektivs sowie der eingestellten Brennweite des Zoomsystems.

Bei digitalen Mikroskopen werden häufig Vergrößerungssysteme verwendet, die sowohl ein Objektivsystem als auch ein Zoomsystem aufweisen, wobei das Zoomsystem das Bild des zu mikroskopierenden Objekts direkt auf einer Bilderfassungseinheit des digitalen Mikroskopsystems abbildet. Die Vergrößerung ergibt sich hierbei als Quotient aus der eingestellten Brennweite des Zoomsystems und der Brennweite des in den Strahlengang befindlichen Objektivs. Um eine möglichst große Vergrößerung zu erreichen, muss somit beim Zoomsystem eine maximal große Brennweite eingestellt werden und ein Objektiv mit einer kleinen Brennweite verwendet werden. Umgekehrt muss für eine geringe Vergrößerung eine möglichst geringe Brennweite über das Zoomsystem eingestellt sein und ein Objektiv mit einer möglichst großen Brennweite verwendet werden.

Bei bekannten Mikroskopen wird ein möglichst großer Zoomfaktor, d.h. ein möglichst großer einstellbarer Vergrößerungsbereich, dadurch erreicht, dass der Zoombereich jeweils bis an seine Grenzen ausgenutzt wird und entsprechend Objektive mit sehr verschiedenen Brennweiten verwendet werden. Somit erfolgt die Einstellung der maximalen und minimalen Vergrößerung dadurch, dass die Objektive an das Zoomsystem angepasst werden.

Um einen möglichst großen Vergrößerungsbereich zu erzielen, müssen somit sowohl Objektive mit einer sehr kurzen Brennweite als auch Objektive mit einer sehr langen Brennweite verwendet werden. Objektive mit sehr kurzen Brennweiten sind jedoch nachteilig, da die für hohe Vergrößerungen notwendigen numerischen Aperturen ein aufwendiges Design der Objektive erfordern. Solche Objektive erlauben dann meistens nur sehr kleine Feldwinkel, da die optischen Korrektionen sonst nicht erhalten werden können. Hochaperturige Compound-Objektive erlauben daher generell keine Nachschaltung eines Zoomsystems und schneiden größere Feldwinkel durch Vignettierung ab.

Umgekehrt erfordern die für geringe Vergrößerungen benötigten langen Brennweiten der Objektive eine entsprechend große Distanz zwischen Objektivinterface und der Objektebene. Daher ist beim Einbringen derartiger Objektive in den Strahlengang meist ein Wegfahren des Zoomsystems vom Objekt nötig, um den notwendigen großen Abstand zur Objektebene zu erhalten. Ein weiterer Nachteil von Objektiven mit langen Brennweiten ist, dass für eine gegebene objektseitige Auflösung der Pupillendurchmesser entsprechend groß sein muss, was hohe Kosten zur Folge hat und große Abmessungen der Objektive erfordert.

Darüber hinaus hat die Verwendung von Objektiven mit stark unterschiedlichen Brennweiten den Nachteil, dass auch die Objektive sehr unterschiedliche Abgleichlängen haben, wobei die Abgleichlänge der Abstand von der Anschraubfläche des Objektivs zur Objektebene ist und sich aus der Baulänge des Objektives und dem freien Arbeitsabstand zusammensetzt. Hierdurch wird eine parfokale Ausführung des Systems nur sehr aufwendig oder gar nicht möglich.

Dokument DE 10 2009 012 707 A1 offenbart ein Mikroskop mit einem Zoomobjektiv, einem pankratischen Zoomsystem und einem Zoomtubussystem. Durch die drei Zoomsysteme ist ein optisches System mit einem Abbildungsmaßstab gebildet, der sich aus dem Produkt der jeweiligen Abbildungsmaßstäbe der drei Zoomsysteme ergibt. Das Mikroskop umfasst ferner einen Wechsler für Objektive mit verschiedener fester Brennweite.

Dokument US 2005/168809 A1 offenbart ein Mikroskop mit einem Objektiv, einem Binokular und einem Zoomsystem.

Dokument DE 10 2010 045 860 A1 offenbart ein Mikroskop mit einem Zoomsystem und einer Blende mit variabler Blendenöffnung, deren objektseitige Apertur im Verhältnis zur Vergrößerung nichtlinear ansteigt.

Dokument EP 2 131 224 A2 offenbart ein Mikroskop mit einem Objektivrevolver an dem mehrere Objektive angeordnet sind und einem Zoomsystem.

Dokument US 2006/0114554 A1 offenbart ein Mikroskop mit einem Objektivrevolver mit mehreren unendlich korrigierten Objektiven und einem afokalen Zoomsystem.

Dokument DE 102 14 191 A1 offenbart ein Mikroskopsystem mit einer Objektivlinseneinheit zum Einbringen von Objektiven mit verschiedener Vergrößerung in einen Beobachtungsstrahlengang des Mikroskopsystems.

Es ist Aufgabe der Erfindung, ein Mikroskop anzugeben, das einen großen Vergrößerungsbereich aufweist und dennoch einfach und kompakt aufgebaut ist.

Diese Aufgabe wird durch ein Mikroskop mit den Merkmalen des Anspruchs 1 gelöst. Vorteilhafte Weiterbildungen der Erfindung sind in den abhängigen Ansprüchen angegeben.

Erfindungsgemäß ist jedem Objektiv ein Zoomteilbereich innerhalb des Gesamt-Zoombereiches zugeordnet.

Durch die Verwendung eines Zoomsystems, welches größer dimensioniert ist, als es eigentlich für den gewünschten Zoomfaktor notwendig wäre, wird erreicht, dass die Brennweitenunterschiede der verwendeten Objektive nicht so groß wie bei konventionellen Mikroskopen sein müssen. Insbesondere kann durch Zuordnung von Zoomteilbereichen erreicht werden, dass bei Objektiven mit einer großen Vergrößerung auch eine möglichst hohe Vergrößerung durch das Zoomsystem erfolgt, und dieses somit für eine hohe Gesamtvergrößerung zusammenwirkt. Bei Objektiven niedriger Vergrößerung dagegen wird der Zoomteilbereich derart innerhalb des Gesamt-Zoombereiches gewählt, dass auch er einer niedrigeren Vergrößerung entspricht, so dass große Feldwinkel erreicht werden. Somit wird durch den zugeordneten Zoomteilbereich erreicht, dass das Zoomsystem jeweils an die individuellen Anforderungen des jeweiligen Objektivs angepasst ist, so dass entsprechend an den Aufbau der Objektive geringere Anforderungen gestellt werden können und insbesondere Objektive mit näher beieinanderliegenden Brennweiten verwendet werden können. Hierdurch wird erreicht, dass die Objektive kompakter und somit kostengünstiger aufgebaut werden können. Insbesondere können somit Objektive mit ähnlicheren Abmessungen verwendet werden, was insbesondere ein parfokales Objektivsystem ermöglicht. Durch eine solche parfokale Ausführung des Objektivsystems wird wiederum erreicht, dass bei einem Objektivwechsel keine neue Fokussierung erfolgen muss. Darüber hinaus wird ermöglicht, dass ein vergleichsweise hoher Zoomfaktor erreicht wird. Dies bringt den Vorteil mit sich, dass insbesondere bei jedem Objektiv ein für die Bedienperson tatsächlich verbleibender Zoomfaktor gleich groß ausfällt.

Unter dem Gesamt-Zoombereich des Zoomsystems wird insbesondere der baulich bedingte maximal zur Verfügung stehende Zoombereich verstanden. Der Gesamt-Zoombereich gibt insbesondere die verschiedenen Brennweiten an, die über das Zoomsystem eingestellt werden können. Die Grenzen des Gesamt-Zoombereiches sind somit durch eine minimale Brennweite und eine maximale Brennweite des Zoomsystems gegeben.

Das Objektivsystem umfasst insbesondere einen Objektivrevolver, in dem die verschiedenen Objektive gelagert sind und durch dessen Drehung jeweils das gewünschte Objektiv in den Strahlengang eingebracht werden kann. Die Objektive selbst sind insbesondere derart ausgebildet, dass bei ihnen jeweils die Anordnung der einzelnen Linsengruppen zueinander fest vorgegeben und nicht verstellbar ist. Das Zoomsystem dagegen weist mehrere Linsengruppen auf, von denen mindestens eine relativ zu den unbeweglichen Linsengruppen axial verfahrbar ist, wodurch die Brennweite des Zoomsystems und somit seine Vergrößerung eingestellt werden kann.

Vorzugsweise ist auch dem zweiten Objektiv ein zweiter Zoomteilbereich innerhalb des Gesamt-Zoombereichs zugeordnet ist.

Der Zoomteilbereich mindestens eines Objektivs ist kleiner als der Gesamt-Zoombereich. Besonders vorteilhaft ist es, wenn die Zoomteilbereiche aller Objektive jeweils kleiner als der Gesamt-Zoombereich des Zoomsystems sind. Somit wird für jedes Objektiv nur jeweils der Teilbereich des Gesamt-Zoombereiches verwendet, der von seinen Eigenschaften her zu den Eigenschaften des Objektivs passt.

Da der Gesamt-Zoombereich des Objektivs somit größer ist als die Zoomteilbereiche, die für die einzelnen Objektive verwendet werden, wird das Zoomsystem auch als "überdimensioniertes" oder "oversized" Zoomsystem bezeichnet.

Die Zoomteilbereiche der Objektive können sich hierbei zumindest teilweise auch überschneiden. Alternativ ist auch möglich, dass die Zoomteilbereiche auch derart gewählt sind, dass keine Überschneidungen erfolgen. Durch das Überschneiden der Zoomteilbereiche wird erreicht, dass jedes Objektiv durch das entsprechende Einstellen der Brennweite des Zoomsystems in einem möglichst großen Verstellbereich hat und die Vergrößerung entsprechend stark variiert werden kann.

Bei einer bevorzugten Ausführungsform der Erfindung sind die unteren und oberen Grenzen der Zoomteilbereiche jeweils derart gewählt, dass sich bei den verschiedenen Zoomteilbereichen zwischen der jeweiligen unteren und oberen Grenze jeweils der gleiche vorbestimmte Zoomfaktor ergibt. Unter dem Zoomfaktor wird insbesondere der Quotient aus der oberen und der unteren Grenze, also insbesondere der Quotient aus der maximalen Brennweite und der minimalen Brennweite, für den jeweiligen Zoomteilbereich verstanden. Somit wird erreicht, dass für jedes Objektiv der Bedienperson der gleiche Zoomfaktor zur Verfügung steht, so dass die Bedienperson unabhängig davon, welches Objektiv verwendet wird, die gleiche Vergrößerungsmöglichkeit hat, wobei sich jedoch je nach verwendetem Objektiv natürlich unterschiedliche Gesamtvergrößerungen ergeben, da sich dieser als Quotient der Brennweite des Zoomsystems durch die Brennweite des Objektivs ergeben.

Insbesondere ist es vorteilhaft, wenn die untere Grenze mindestens eines Zoomteilbereichs der unteren Grenze des Gesamt-Zoombereiches und die obere Grenze mindestens eines Zoomteilbereiches der oberen Grenze des Gesamt-Zoombereiches entspricht. Hierdurch wird erreicht, dass der Gesamt-Zoombereich des Zoomsystems optimal ausgenutzt wird und somit auch der sich insgesamt ergebende Zoomfaktor des Mikroskops möglichst groß ist.

Es ist besonders vorteilhaft, wenn die Zoomteilbereiche derart voreingestellt sind, dass der Zoomteilbereich eines Objektivs mit einer Brennweite, die größer ist als die Brennweite eines anderen Objektivs, Vergrößerungen bzw. Brennweiten umfasst, die kleiner sind als die kleinste Vergrößerung bzw. Brennweite des Zoomteilbereiches dieses anderen Objektivs. Wenn das eine Objektiv eine größere Brennweite als das andere Objektiv hat, bedeutet dies, dass dieses Objektiv eine geringere Vergrößerung als das andere Objektiv bewirkt. Der Zoomteilbereich ist somit derart gewählt, dass dieser bezogen auf den gesamten Zoombereich die kleineren Brennweiten des Zoomteilbereiches abdeckt, so dass sich die Eigenschaften des Objektivs und des Zoomsystems, insbesondere der gewünschte große Feldwinkel bei niedrigen Vergrößerungen, optimal ergänzen.

Umgekehrt sind die Zoomteilbereiche derart voreingestellt, dass der Zoomteilbereich eines Objektivs mit einer Brennweite, die kleiner ist als die Brennweite eines anderen Objektivs, Vergrößerungen bzw. Brennweiten umfasst, die größer sind als die größte Vergrößerung bzw. Brennweite des Zoomteilbereiches eines anderen Objektivs. Hierdurch wird erreicht, dass bei Objektiven mit einer hohen Vergrößerung auch der Zoomteilbereich die hohen Brennweiten des Gesamt-Zoombereiches abdeckt und somit zu einer großen Gesamtvergrößerung beiträgt.

Bei einer besonders bevorzugten Ausführungsform der Erfindung hat das Objektivsystem ein erstes Objektiv mit einer ersten Brennweite und ein zweites Objektiv mit einer zweiten Brennweite, wobei die zweite Brennweite größer als die erste Brennweite ist. Somit bewirkt das zweite Objektiv eine geringere Vergrößerung als das erste Objektiv. Der Gesamt-Zoombereich weist als untere Grenze eine dritte Brennweite und als obere Grenze eine vierte Brennweite auf. Der dem ersten Objektiv zugeordnete erste Zoomteilbereich hat als obere Grenze die vierte Brennweite und der dem zweiten Objektiv zugeordnete zweite Zoomteilbereich als untere Grenze die dritte Brennweite. Somit wird erreicht, dass das erste Objektiv, welches von den beiden Objektiven die größere Vergrößerung hat, beim Einstellen der vierten Brennweite zusammen mit dem Zoomsystem eine maximal große Gesamtvergrößerung erreicht. Umgekehrt kann durch Auswählen des zweiten Objektivs und der dritten Brennweite eine möglichst geringe Vergrößerung erreicht werden.

Die Brennweiten können insbesondere auch derart gewählt sein, dass sich bei entsprechenden Einstellungen die Gesamtvergrößerungen von < 1 ergeben, d. h., dass die Objekte verkleinert abgebildet werden.

Es sind Begrenzungsmittel vorgesehen, durch die die Verstellbarkeit des Zoomsystems jeweils auf den Zoomteilbereich begrenzt ist, der dem ausgewählten Objektiv, also demjenigen Objektiv, das aktuell in den Strahlengang eingebracht ist, zugeordnet ist.

Gemäß der Erfindung ist als Begrenzungsmittel an jedem Objektiv mindestens ein Anschlag vorgesehen, wobei durch den Anschlag die Verstellbarkeit des Zoomsystems auf den diesem Objektiv jeweils zugeordneten Zoomteilbereich begrenzt wird. Somit wird rein mechanisch sichergestellt, dass bei jedem Objektiv nur ein Verstellen des Zoomsystems innerhalb des zugeordneten Zoomteilbereiches möglich ist.

Bei einer besonders bevorzugten Ausführungsform sind an jedem Objektiv zwei Anschläge vorgesehen, durch die das Verstellen des Zoomsystems begrenzt wird. Sofern eine Grenze des Zoomteilbereichs durch eine Grenze des baubedingt maximal möglichen Gesamt-Zoombereiches gegeben ist, kann auf dieser Seite auf einen Anschlag verzichtet werden.

Bei einer nicht beanspruchten Alternative kann das Verstellen des Zoomsystems auch elektrisch erfolgen, indem eine elektrische Antriebseinheit, insbesondere ein Motor, vorgesehen ist. Ferner ist eine Steuereinheit zum Ansteuern der Antriebseinheit vorgesehen, wobei in dieser Steuereinheit die den jeweiligen Objektiven zugeordnete Teilbereiche gespeichert sind. Die Steuereinheit steuert die Antriebseinheit dann derart an, dass jeweils nur ein Verstellen innerhalb des jeweiligen Zoomteilbereiches möglich ist. Insbesondere ist ein Sensorik vorgesehen, durch die die Steuereinheit automatisch erkennen kann, welches Objektiv in den Strahlengang eingebracht ist, so dass die Steuereinheit dann automatisch den von der Bedienperson einstellbaren Zoomteilbereich auswählt und die elektrische Antriebseinheit entsprechend ansteuert.

Ferner ist es vorteilhaft, wenn das Mikroskop ein Betätigungselement zum manuellen Einstellen des Vergrößerungsfaktors des Zoomsystems umfasst. Bei diesem Betätigungselement kann es sich um einen Drehknopf handeln.

Ferner ist es vorteilhaft, wenn das Mikroskop eine Blende zum Einstellen des Lichtdurchlasses in Abhängigkeit des jeweils gewählten Objektivs und der jeweils eingestellten Brennweite des Zoomsystems umfasst. Bei dieser Blende handelt es sich insbesondere um eine gesteuerte Irisblende, welche den Aperturverlauf in Abhängigkeit des Objektivs und der eingestellten Brennweite des Zoomsystems regelt. Dies ist insbesondere aufgrund der bei stark vergrößernden Objektiven allgemein geringeren Pupillendurchmesser notwendig. Bei hoch vergrößernden Objektiven steigt die Vergrößerung typischerweise stärker als die Apertur, da das Öffnungsverhältnis des Objektivs ansonsten zu groß wird, so dass eine Korrektion der Aberrationen sehr aufwendig wäre. Bei einer alternativen Ausführungsform kann auf eine solche Blende verzichtet werden, wenn entsprechend Objektive mit sehr hohen Aperturen verwendet werden.

Ferner ist es vorteilhaft, wenn das Zoomsystem mindestens zwei Linsengruppen aufweist, von denen eine zur Einstellung der Brennweite des Zoomsystems in Richtung der optischen Achse bewegbar ist. Bei einer bevorzugten Ausführungsform weist das Zoomsystem drei oder vier Linsengruppen auf, von denen zwei in Richtung der optischen Achse bewegbar sind.

Bei dem Mikroskop handelt es sich insbesondere um ein digitales Mikroskop, das eine Bilderfassungseinheit zur Aufnahme von Bildern des mikroskopierenden Objektes umfasst. Bei dem digitalen Mikroskop wird das Bild des zu mikroskopierenden Objektes insbesondere über das Zoomsystem direkt auf die Bilderfassungseinheit abgebildet.

Bei einer alternativen Ausführungsform kann es sich auch um visuelle Mikroskope handeln.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische, perspektivische Darstellung eines digitalen Mikroskops;
- Figur 2: eine schematische Darstellung eines Vergrößerungssystems des Mikroskops nach Figur 1;
- Figur 3: eine schematische Darstellung eines Vergrößerungssystems nach Figur 2 bei der Verwendung eines ersten Objektivs;
- Figur 4: eine schematische Darstellung eines Vergrößerungssystems nach Figur 2 bei der Verwendung eines zweiten Objektivs;
- Figur 5: eine schematische Darstellung eines Gesamt-Zoombereiches und der Zoomteilbereiche des ersten und des zweiten Objektivs;
- Figur 6: eine schematische, perspektivische Darstellung eines Ausschnitts des Mikroskops nach Figur 1;
- Figur 7: eine weitere schematische perspektivische Darstellung des Ausschnitts nach Figur 6;
- Figur 8: eine schematische Darstellung eines Gehäuses des Mikroskops;
- Figur 9: eine weitere schematische, perspektivische Darstellung des Gehäuses nach Figur 8;
- Figur 10: eine schematische Darstellung eines Detailausschnittes des Mikroskops;
- Figur 11: eine schematische Darstellung eines Ausschnitts eines Objektivs und eines Objektivgehäuses;
- Figur 12: eine schematische, perspektivische Darstellung des Betätigungselements des Zoomsystems in einer ersten Drehposition;
- Figur 13: eine schematische, perspektivische Darstellung des Betätigungselements nach Figur 12 in einer zweiten Drehposition;
- Figur 14: eine schematische Darstellung des Betätigungselements bei einem eingesetzten ersten Objektiv in einem ersten Betriebszustand;
- Figur 15: eine schematische Darstellung des Betätigungselements bei eingesetztem ersten Objektiv in einem zweiten Betriebszustand;
- Figur 16: eine schematische Darstellung des Betätigungselements bei einem eingesetzten zweiten Objektiv in einem dritten Betriebszustand;
- Figur 17: eine schematische Darstellung des Betätigungselements bei eingesetztem zweiten Objektiv in einem vierten Betriebszustand;
- Figur 18: eine schematische Darstellung des Betätigungselements bei einem eingesetzten dritten Objektiv in einem fünften Betriebszustand; und
- Figur 19: eine schematische Darstellung des Betätigungselements bei eingesetztem dritten Objektiv in einem sechsten Betriebszustand.

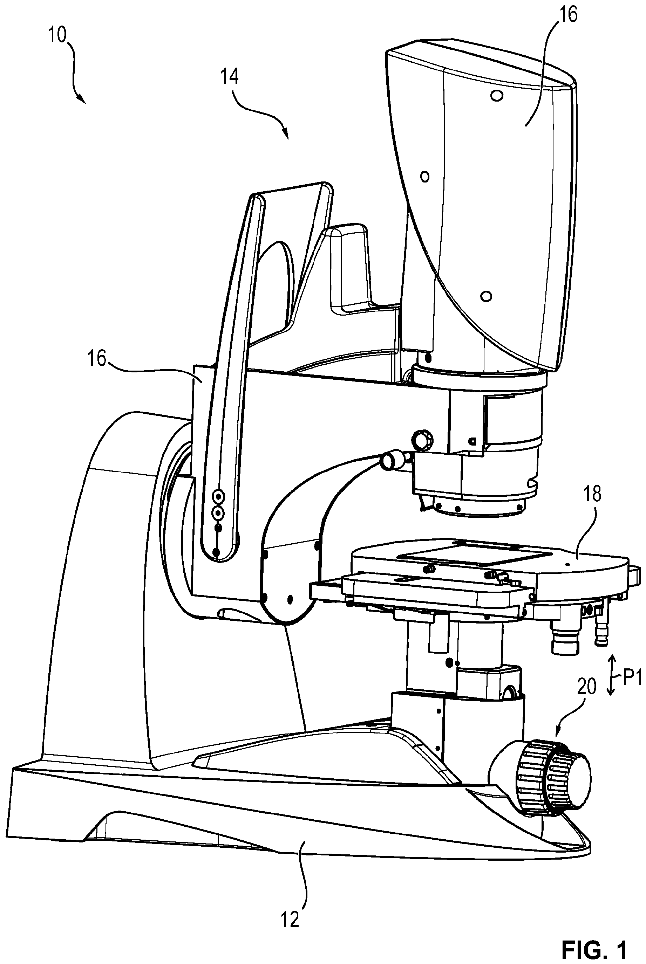

In Figur 1 ist eine schematische perspektivische Darstellung eines digitalen Mikroskops gezeigt. Das Mikroskop 10 umfasst einen stationären Stativgrundkörper 12, sowie eine relativ zu diesem verschwenkbare Schwenkeinheit 14.

Die Schwenkeinheit 14 umfasst mindestens eine Bilderfassungseinheit, mit deren Hilfe ein Bild der zu mikroskopierenden Objekte aufgenommen werden kann. Insbesondere können über diese Bilderfassungseinheit nicht nur einzelne Bilder, sondern auch Videos aufgenommen werden, die es ermöglichen, das zu mikroskopierende Objekt aus verschiedenen Blickwinkeln zu betrachten.

Ferner weist die Schwenkeinheit ein Objektiv und ein Zoomsystem auf, mit dessen Hilfe unterschiedliche Vergrößerungen der zu mikroskopierenden Objekte eingestellt werden können. Das Objektivsystem hat eine Vielzahl von Objektiven, von denen jeweils eines wahlweise in den Strahlengang eingebracht ist.

Die Bilderfassungseinheit, das Objektivsystem und das Zoomsystem sind in Figur 1 nicht sichtbar, da diese von dem Gehäuse 16 der Schwenkeinheit 14 verdeckt sind.

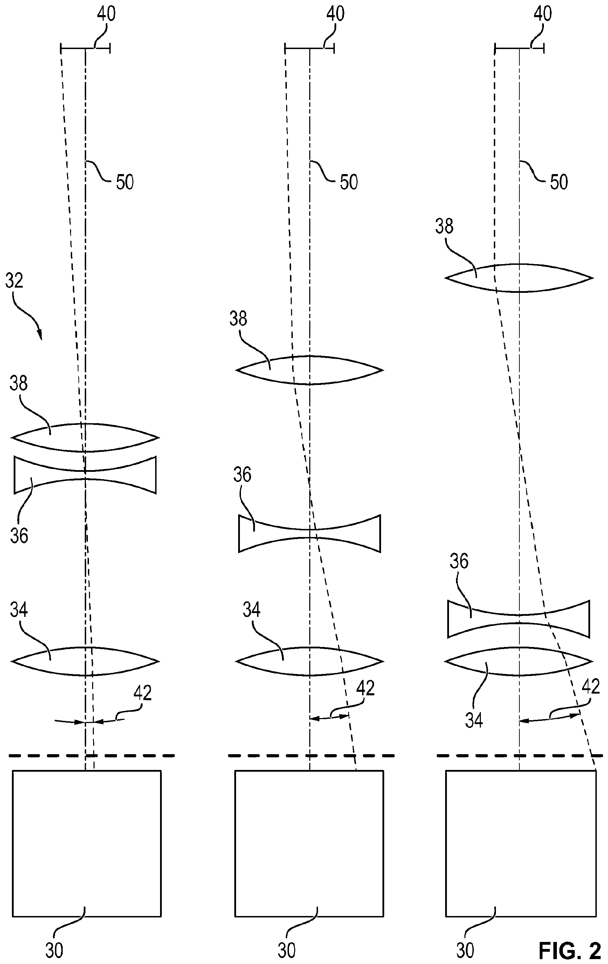

Der Aufbau des Objektivsystems und des Zoomsystems wird im Folgenden noch im Zusammengang mit den Figuren 2 bis 4 näher beschrieben.

Die Objektive des Objektivsystems sind insbesondere parfokal ausgebildet, so dass beim Objektivwechsel keine Refokussierung durch die Bedienperson erfolgen muss. Die Objektive sind hierbei insbesondere auf den Abstand zwischen der Drehachse, durch die Schwenkachse 14 gedreht werden kann und dem Interface der Objektive, abgestimmt, so dass sich ein euzentrisches System ergibt, was zur Folge hat, dass bei einem Verschwenken der Schwenkeinheit 14 keine neue Fokussierung erfolgen muss.

An dem Stativgrundkörper ist ferner ein Objekttisch 18 angeordnet, auf dem die zu mikroskopierenden Objekte aufgebracht sind. Dieser Objekttisch 18 kann mit Hilfe von Stellrädern 20 relativ zum Stativgrundkörper 12 in Richtung des Doppelpfeiles P1 verstellt werden, wodurch eine Fokussierung der zu mikroskopierenden Objekte möglich ist.

In Figur 2 ist rein schematisch das in der Schwenkeinheit 14 angeordnete Vergrößerungssystem in drei verschiedenen Einstellungen gezeigt. Das Vergrößerungssystem umfasst ein Objektivsystem 30 sowie ein Zoomsystem 32, über deren Zusammenspiel eine gewünschte Gesamtvergrößerung erreicht wird. Das Objektivsystem 30 umfasst mindestens zwei Objektive 44, 52 mit unterschiedlichen Brennweiten, von denen jeweils eines wahlweise in den Strahlengang des Mikroskops 10 eingeschwenkt ist.

Das Zoomsystem 32 weist drei Linsengruppen 34 bis 38 auf, von denen zwei Linsengruppen 36, 38 in Richtung der optischen Achse 50 verstellbar sind. Bei einer alternativen Ausführungsform der Erfindung kann das Zoomsystem auch nur zwei Linsengruppen 34 bis 38 umfassen, von denen lediglich eine Linsengruppe 34 bis 38 axial verstellbar ist. Ebenso sind auch Zoomsysteme mit mehr als drei Linsengruppen 34 bis 38 denkbar.

Bei der in Figur 2 gezeigten Ausführungsform wird das Bild des Objektes über das Zoomsystem 32 direkt auf einer Bilderfassungseinheit 40 abgebildet, bei der sich insbesondere um eine Kamera handeln kann.

In Figur 2 sind drei Einstellungen des Zoomsystems 32 gezeigt. Bei der linken Einstellung ist das Zoomsystem 32 so eingestellt, dass es eine maximale Brennweite hat und somit eine maximale Vergrößerung bewirkt. Entsprechend ist der Feldwinkel 42, welcher den Winkel des Hauptstrahls zur optischen Achse 50 im Bereich der Schnittstelle zum Objektivsystem 30 angibt, minimal ausgebildet.

Die in Figur 2 dargestellte rechte Einstellung dagegen zeigt die andere Extremeinstellung des Zoomsystems 32, nämlich diejenige Einstellung, bei der das Zoomsystem 32 eine minimale Brennweite hat und entsprechend eine minimale Vergrößerungswirkung aufweist. In diesem Fall ist der Feldwinkel 42 maximal ausgebildet.

Der in Figur 2 gezeigte mittlere Fall stellt eine Zwischenstellung dar, bei der eine Brennweite durch das Zoomsystem 32 erreicht wird, die größer ist als die minimale Brennweite und kleiner als die maximale Brennweite ist. Entsprechend liegt hierbei der Feldwinkel 42 zwischen den Feldwinkeln 42 der anderen beiden Fälle.

Die jeweilige Gesamtvergrößerung des Mikroskops 10 ergibt sich aus dem Quotienten der eingestellten Brennweite des Zoomsystems 32 und die Brennweite des in den Strahlengang eingebrachten Objektivs 44, 52 des Objektivsystems 30.

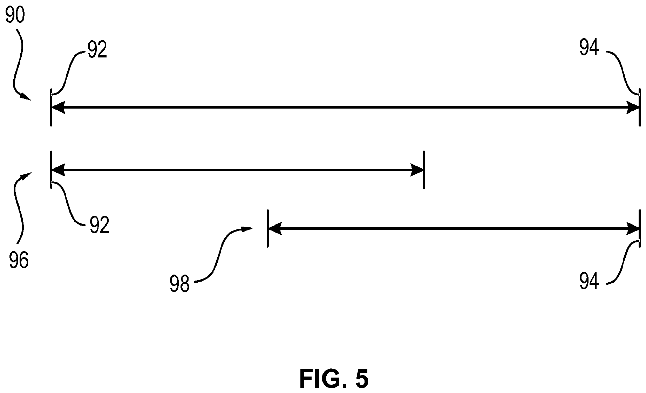

Das Zoomsystem 32 weist einen Gesamt-Zoombereich auf, der die über das Zoomsystem 32 einstellbaren Brennweiten des Zoomsystems 32 angibt. Dieser Gesamt-Zoombereich ist in Figur 5 beispielhaft durch den Pfeil 90 dargestellt, wobei die untere Grenze 92 die minimale Brennweite des Zoomsystems 32 angibt, die sich bei der in Figur 2 rechts gezeigte Einstellung ergibt. Die obere Grenze 94 des Gesamt-Zoombereichs 90 gibt entsprechend die maximale Brennweite des Zoomsystems 32 an, welche sich bei der in Figur 2 links gezeigten Einstellung ergibt. Der Gesamt-Zoombereich 90 ist somit insbesondere bauart bedingt vorgegeben und gibt den maximal ermöglichen Bereich an Vergrößerungen des Zoomsystems 32 an.

Wie bereits beschrieben umfasst das Objektivsystem 32 mehrere Objektive 44, 52 mit unterschiedlichen Brennweiten. Jedem dieser Objektive 44, 52 ist ein Zoomteilbereich innerhalb des Gesamt-Zoombereiches 90 zugeordnet, wobei in Figur 5 ein erster Zoomteilbereich 96 für ein erstes Objektiv 44 und ein zweiter Zoomteilbereich 98 eines zweiten Objektivs 52 dargestellt ist. Die beiden Zoomteilbereiche 96, 98 decken jeweils nur einen Teil des Gesamt-Zoombereichs 90 ab und sind insbesondere derart ausgebildet, dass sie sich zumindest teilweise überlappen.

Das Mikroskop 10 ist derart ausgebildet, dass das Zoomsystem 32 jeweils immer nur innerhalb des Zoomteilbereichs 96, 98 verstellbar ist, der dem aktuell in den Strahlengang eingeschwenkten Objektiv 44, 52 zugeordnet ist.

Bei dem in Figur 5 dargestellten Ausführungsbeispiel hat das erste Objektiv 44, dem der Zoomteilbereich 96 zugeordnet ist, verglichen mit dem zweiten Objektiv 52 eine höhere Brennweite und somit eine geringere Vergrößerungswirkung. Der erste Zoomteilbereich 96 ist entsprechend auch derart gewählt, dass er verglichen mit dem zweiten Zoomteilbereich 98 die kleineren Vergrößerungen des Gesamt-Zoombereichs 90 abdecken, wogegen der zweite Zoomteilbereich 98 die größeren Vergrößerungen des Gesamt-Zoombereichs 90 umfasst.

Somit wird erreicht, dass bei Objektiven 52 mit einer hohen Vergrößerung, also einer geringen Brennweite, auch hohe Vergrößerungen durch das Zoomsystem erreicht werden, so dass insgesamt eine hohe Gesamtvergrößerung erzielt wird.

Umgekehrt wird bei Objektiven 44 mit einer geringen Vergrößerung, also mit einem großen Feldwinkel, ein Zoomteilbereich 96 zugeordnet, bei dem das Zoomsystem 32 ebenfalls eine geringe Vergrößerung und somit einen großen Feldwinkel aufweist.

Somit ist der verwendete Teilbereich des Zoomsystems 32 immer auf die Eigenschaften des jeweiligen Objektivs 44, 52 abgestimmt.

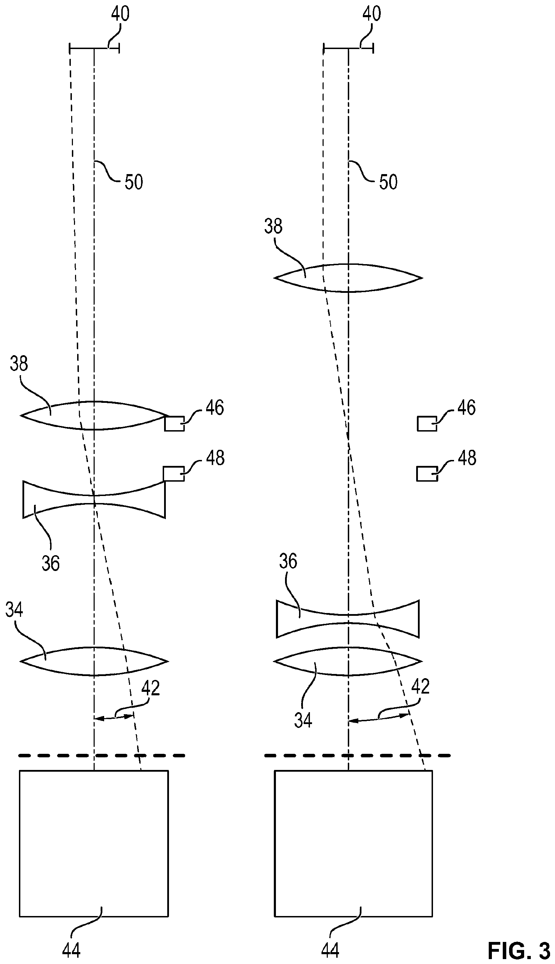

In Figur 3 ist eine schematische Darstellung des Vergrößerungssystems nach Figur 2 in zwei Zuständen gezeigt, wobei das erste Objektiv 44 des Objektivsystems 30 in den Strahlengang eingebracht ist. Bei dem ersten Objektiv 44, das eine verhältnismäßig große Brennweite, also eine geringe Vergrößerung, hat, ist durch Begrenzungselemente 46, 48 die Verstellbarkeit des Zoomsystems 32 derart begrenzt, dass, verglichen mit dem maximalen Verstellbereich, der in Figur 2 gezeigt ist, zwar ein Verstellen bis zur minimalen Brennweite (Figur 3, rechts), aber nicht bis zur maximalen Brennweite möglich ist. Entsprechend ist nur ein Verstellen des Zoomsystems 32 innerhalb des ersten Zoomteilbereichs 96 möglich. Durch die Begrenzungselemente 46, 48 wird das Aufeinanderzubewegen der Linsengruppen 36, 38 auf den in Figur 3, links gezeigten Zustand begrenzt. Bei den Begrenzungselementen 46, 48 handelt es sich insbesondere um Anschläge, die mit dem ersten Objektiv 44 gekoppelt sind, so dass beim Einbringen des ersten Objektivs 44 in den Strahlengang die Anschläge 46, 48 automatisch mit bewegt werden, so dass sie derart angeordnet sind, dass sie im Bewegungsbereich der Linsengruppen 34 bis 38 angeordnet sind.

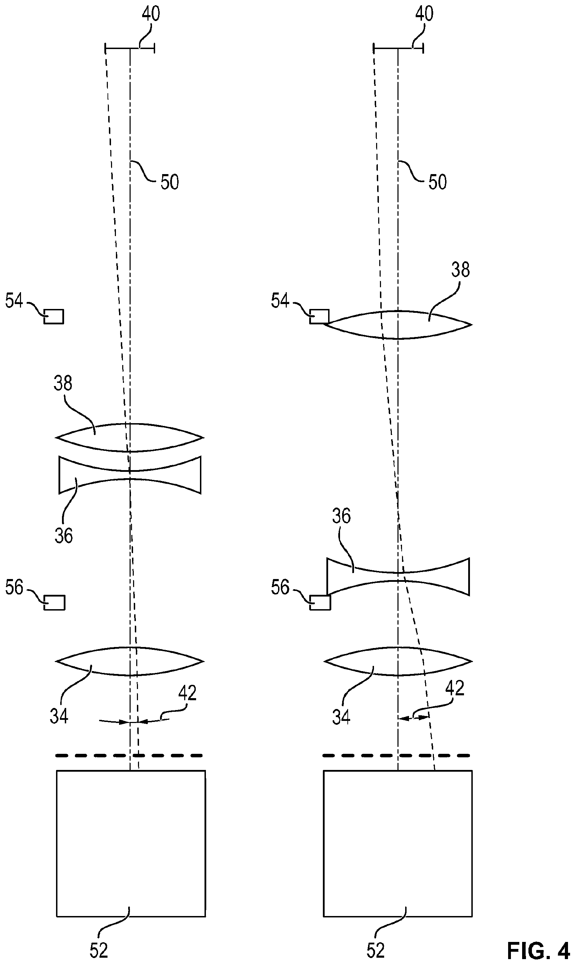

In Figur 4 ist der Fall dargestellt, bei dem das zweite Objektiv 52 in den Strahlengang eingeschwenkt ist. Auch dieses Objektiv 52 umfasst wieder Anschläge 54, 56, durch die die Verstellung des Zoomsystems 32 auf den zweiten Zoomteilbereich 98 begrenzt wird. Bei diesem zweiten Objektiv 52 wird durch die Anschläge 54, 56 verhindert, dass die Linsengruppen 36, 38 weiter als bei dem in Figur 4, rechts gezeigten Zustand voneinander weg bewegt werden, so dass das Einstellen der minimalen Vergrößerung verhindert wird.

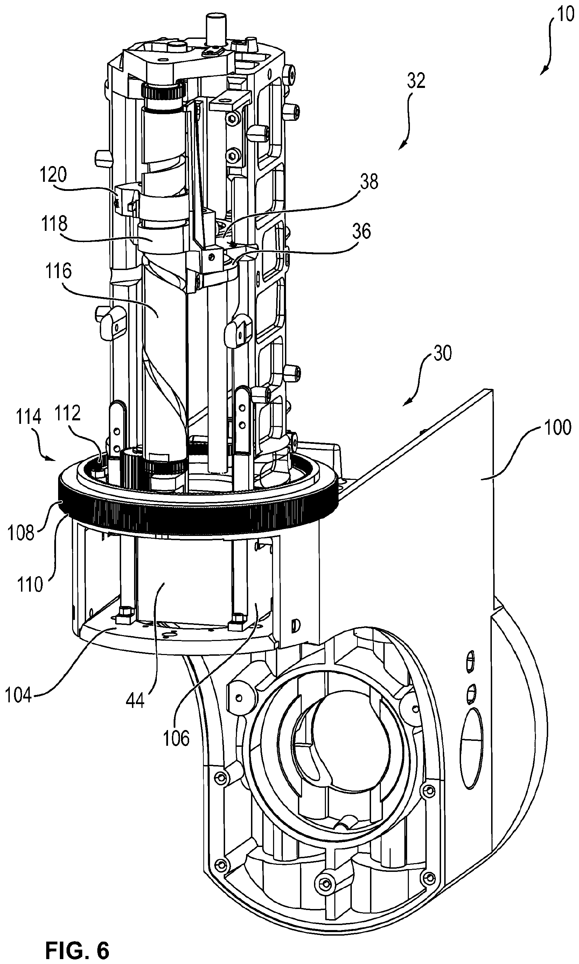

Die Begrenzungselemente 46, 48, 54, 56 sind in den Figuren 3 und 4 nur rein schematisch dargestellt. Bei der konkreten Ausführungsform, wie diese in die Figuren 6 bis 19 gezeigt ist, sind die Begrenzungselement 46, 48, 54, 56 insbesondere nicht im Zoomsystem 32 angeordnet, sondern, wie nachfolgend noch ausführlich erläutert, als verstellbare Stift 130 bis 136 an der Schnittstelle zwischen Objektivsystem 30 und Zoomsystem 32.

Wie in Figur 5 dargestellt sind somit die Zoomteilbereiche 96, 98, in denen das Zoomsystem 32 jeweils betrieben wird, kleiner als der maximale Gesamt-Zoombereich 90 ausgebildet, weswegen das Zoomsystem 32 auch als "überdimensioniertes" oder als "oversized" Zoomsystem bezeichnet wird.

Verglichen mit bekannten Mikroskopen, bei denen immer der gesamte Zoombereich verwendet wird und die maximale und minimale Vergrößerung durch die entsprechende Wahl der Objektive bewerkstelligt wird, müssen nun die verwendeten Objektive für den gleichen Gesamtvergrößerungsbereich nicht mehr so unterschiedlichen Brennweiten aufweisen, wie dies folgendes Zahlbeispiel verdeutlichen soll:
Um bei einem Mikroskop nach dem Stand der Technik einen Vergrößerungsbereich zwischen 0,15x und 30x mit zwei Objektiven zu erreichen, wird beispielsweise ein erstes Objektiv mit einer Brennweite von 20 und ein zweites Objektiv mit einer Brennweite von 250 verwendet. Das Zoomsystem hat eine einstellbare Brennweite zwischen 38 und 600. Die maximale Vergrößerung von 30 wird dadurch erreicht, dass das erste Objektiv verwendet wird und die maximale Brennweite des Zoomsystems eingestellt wird. In diesem Fall ergibt sich eine Vergrößerung von 30 durch die Berechnungsformel b=fzoom/f objektiv und somit 600/20 = 30.

Entsprechend ergibt sich die minimale Vergrößerung von 0,15 bei Verwendung des zweiten Objektivs und der minimalen Brennweite des Zoomsystems als Quotient aus 38 und 250.

Um bei dem Mikroskop gemäß der Ausführungsform der Erfindung den gleichen Vergrößerungsbereich von 0,15x bis 30x zu erreichen, ist nun ein Zoomsystem 32 mit einer einstellbaren Brennweite zwischen 21 und 600 vorgesehen. Der Zoomteilbereich des ersten Objektivs 44 beträgt 38 bis 600, der Zoomteilbereich des zweiten Objektivs 21 bis 336. Das erste Objektiv 44 hat eine Brennweite von 140, das zweite Objektiv 52 eine Brennweite von 20.

Für eine maximale Vergrößerung von 30 wird wiederum das zweite Objektiv 52 zusammen mit der maximalen Brennweite des Zoomsystems 32 verwendet. Für eine minimale Vergrößerung wird das erste Objektiv 44 zusammen mit der minimalen Brennweite des Zoomsystems 32 verwendet, wobei sich wiederum der Faktor 0,15 als Quotient aus 21 und 140 ergibt.

Somit kann der gleiche Gesamtvergrößerungsbereich erreicht werden, wobei jedoch der Brennweitenunterschied zwischen den verwendeten Objektiven 44, 52 deutlich geringer ausfällt.

Dies hat den Vorteil, dass die Objektive 44, 52 wesentlich kompakter und einfach aufgebaut werden können. Insbesondere kann über die geringere Spreizung der Brennweiten der Objektive 44, 52 ein parfokales Objektivsystem 30 realisiert werden. Darüber hinaus ergibt sich für jedes Objektiv 44, 52 dergleiche von der Bedienperson wählbare Zoomfaktor, im oben genannten Beispiel nämlich ein Zoomfaktor von 16 (336/21 bzw. 600/ 38).

Die Zuordnung von Zoomteilbereichen zu verschiedenen Objektiven kann nicht nur bei digitalen Mikroskopen, sondern alternativ auch bei allen anderen Mikroskopen mit einem Objektiv- und einem Zoomsystem verwendet werden.

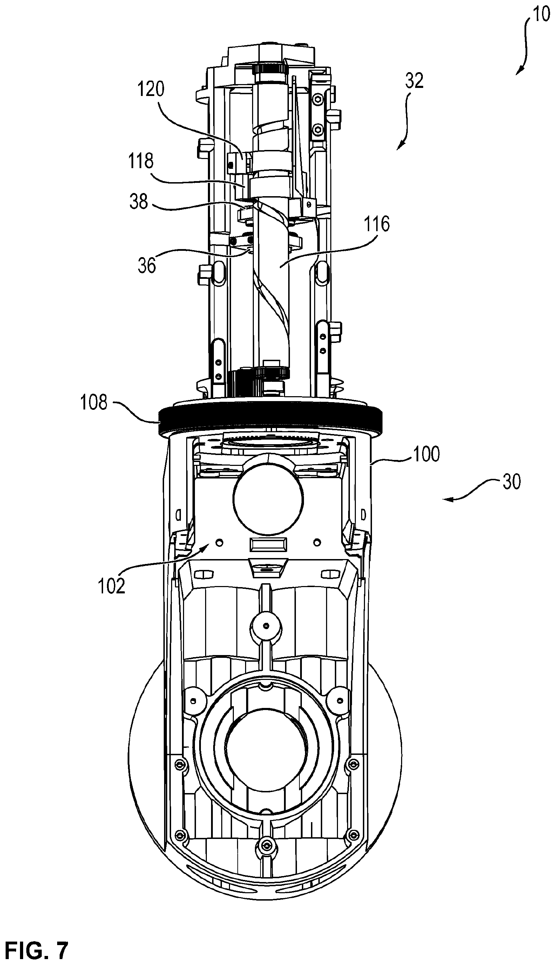

In den Figuren 6 und 7 ist jeweils eine schematische perspektivische Darstellung eines Detailausschnitts des Mikroskops 10 nach Figur 1 dargestellt. Hierbei ist ein Ausschnitt des Zoomsystems 32 sowie des Objektivsystems 30 dargestellt. Der Schwerpunkt der Darstellung in den Figuren 6 und 7 und auch der folgenden Figuren ist hierbei darauf gelegt, dass erklärt werden soll, wie die Begrenzung der Verstellbarkeit des Zoomsystem 32 auf die jeweiligen Zoomteilbereiche 96, 98 der verschiedenen Objektive 44, 52 rein mechanisch erfolgt.

Das Objektivsystem 30 weist ein Gehäuse 100 auf, in dem ein Aufnahmebereich 102 vorgesehen ist, in dem das jeweils aktuell in den Strahlengang eingebrachte Objektiv 44 aufgenommen ist. Bei der Darstellung in Figur 7 ist in diesem Aufnahmebereich 102 kein Objektiv eingebracht. Bei der Darstellung in Figur 6 dagegen ist ein Objektiv 44 in dem Aufnahmebereich 102 eingeschoben. Das Objektiv 44 ist hierbei auf einer Platte 104 gelagert und von einem Gehäuse 106 umgeben, wobei die Platte 104 an dem Gehäuse 100 des Objektivsystems 30 befestigt werden kann.

Das Objektivsystem 32 weist ein Drehrad 108 auf, welches durch die Bedienperson des Mikroskops 10 gedreht werden kann. Zur besseren Handhabung ist insbesondere eine Riffelung 110 an der Umfangsfläche des Drehrades 108 vorgesehen. Das Dreh-rad 108 weist an der der Riffelung 110 abgewandten Seite eine Zahnung 112 auf, über die das Drehrad 108 mit Hilfe eines Zahnradsystems 114 mit einer Spindel 116 in Eingriff ist. Durch Drehen des Drehrades 108 wird entsprechend die Spindel 116 gedreht.

Auf der Spindel 116 sind die Linsengruppen 36, 38 über Halterungen 118, 120 gelagert. Beim Drehen der Spindel 116 werden die Linsengruppe 96, 38 entsprechend aufeinander zu oder voneinander weg bewegt.

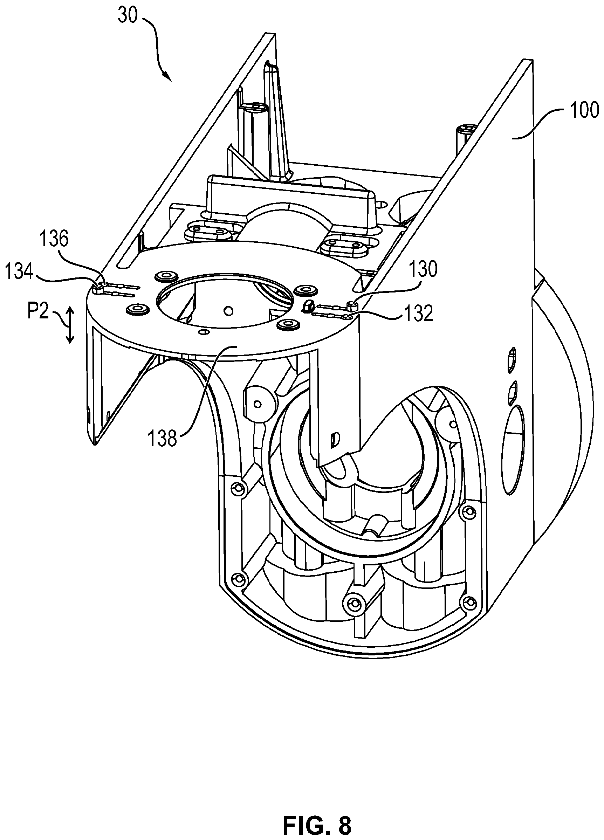

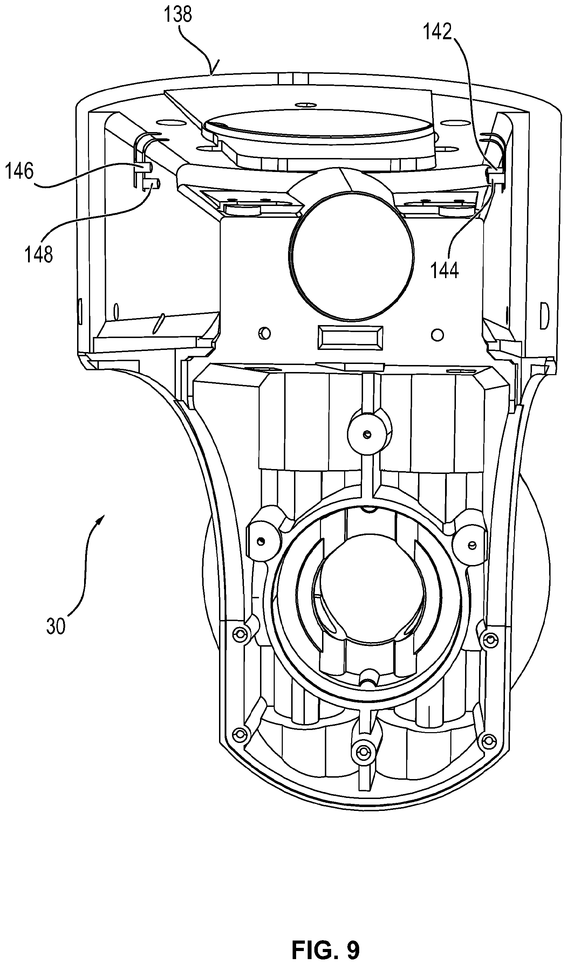

In den Figuren 8 und 9 ist jeweils eine schematische, perspektivische Darstellung des Gehäuses 100 des Objektivsystems 30 gezeigt. In dem Gehäuse 100 sind insgesamt vier Stifte 130 bis 136 in Richtung des Doppelpfeiles P2, insbesondere vertikal, bewegbar angeordnet. Die Stifte 130 bis 136 sind hierbei zwischen einer aktivierten oder deaktivierten Position bewegbar, wobei die Stifte 130, 134 bei der Darstellung in Figur 8 in der aktivierten und die Stifte 132, 136 in der deaktivierten Position gezeigt sind. Bei der aktivierten Position ragen die Stifte 130 bis 136 um eine vorbestimmte Distanz aus der Oberfläche 138 des Gehäuses 100 in Richtung des Drehrades 108 hervor. In der deaktivierten Position sind die Stifte 130 bis 136 innerhalb des Gehäuses 100 angeordnet und ragen insbesondere nicht aus diesem hervor. Alternativ können sie auch in der deaktivierten Position leicht aus dem Gehäuse 100 hervorragen, aber nicht so weit wie in der aktivierten Position.

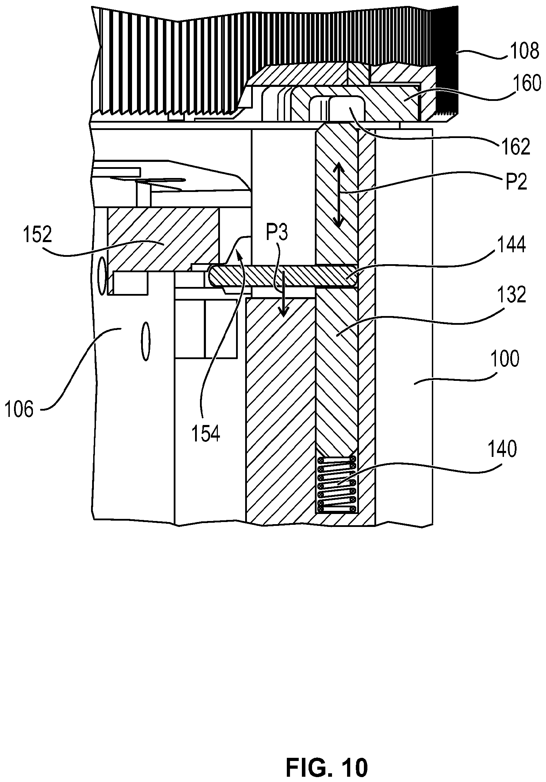

Wie in Figur 10 gezeigt, sind die Stifte 130 bis 136 jeweils über eine Feder 140 in der aktivierten Position vorgespannt.

Ferner ist jeder der Stifte 130 bis 136 jeweils mit einem Stift 142 bis 148 verbunden. Diese Stifte 142 bis 146 ragen, wie in Figur 9 gezeigt, in den Aufnahmebereich 102 hinein und sind jeweils in einem Langloch des Gehäuses 100 geführt.

Durch ein Bewegen der Stifte 142 bis 148 können die Stifte 130 bis 136 entgegen der Rückstellkraft der Feder 140 von der aktivierten in die deaktivierte Position bewegt werden. Hierzu müssen die Stifte 142 bis 148 nach unten in Richtung des Pfeiles P3 bewegt werden. Bei der Darstellung in Figur 9 sind die Stifte 144, 148 entgegen der Rückstellkraft der jeweiligen Feder nach unten bewegt, so dass entsprechend, wie in Figur 8 gezeigt, die zugeordneten Stifte 132, 136 in der deaktivierten Position angeordnet sind.

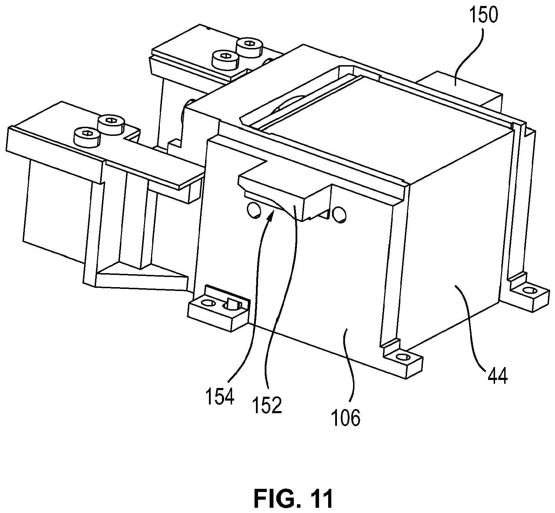

Das Bewegen der Stifte 142, 148 erfolgt mit Hilfe des jeweils in den Aufnahmebereich 102 eingebrachten Objektives 44 durch den Kontakt zu dem entsprechenden Objektivgehäuse 106. In Figur 11 ist eine schematische Darstellung eines Ausschnitts des ersten Objektivs 44 gezeigt. An dem Gehäuse 106 des Objektivs 44 sind zwei Kontaktelemente 150, 152 an gegenüberliegenden Seiten des Gehäuses 102 vorgesehen. Die beiden Kontaktelemente 150, 152 weisen jeweils eine gestufte Kontaktfläche 154 auf. Wird das Objektiv 44 in den Aufnahmebereich 102 eingeschoben, so werden, wie in Figur 10 gezeigt, die Stifte 142 bis 148 nach unten bewegt, sofern im Bereich des jeweiligen Stiftes 142 bis 148 das jeweilige Kontaktelement 150, 152 an der Kontaktfläche 154 eine entsprechende Stufe aufweist, die den entsprechenden Stift 142 bis 148 nach unten bewegt und in dieser Position hält. Entsprechend werden über die Stifte 142 bis 148 die Stifte 130 bis 136 zwischen der aktivierten und der deaktivierten Position verstellt.

Je nach Objektiv 44 sind die Kontaktelemente 150, 152 unterschiedlich ausgebildet, so dass andere Stifte 130 bis 136 in der aktivierten bzw. deaktivierten Position angeordnet sind.

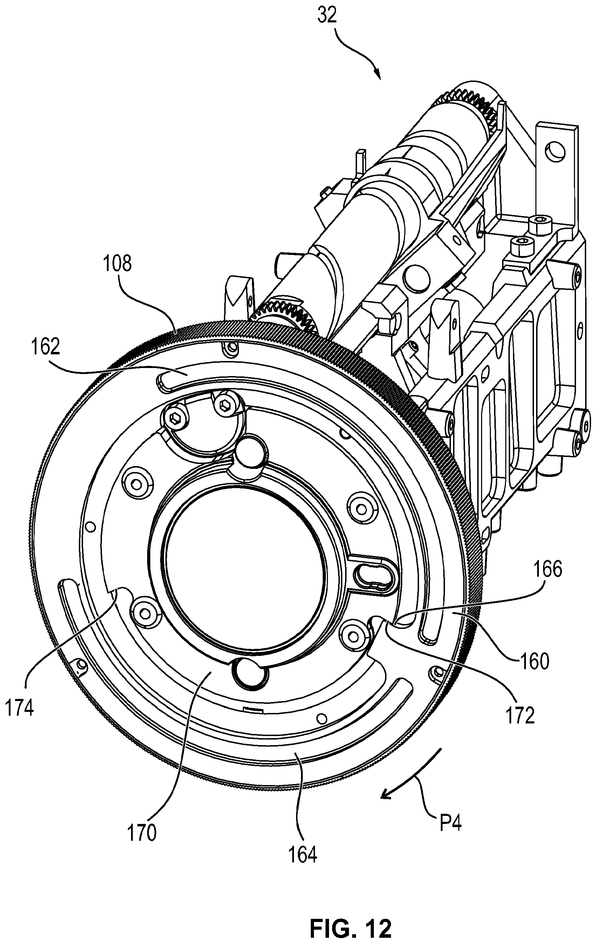

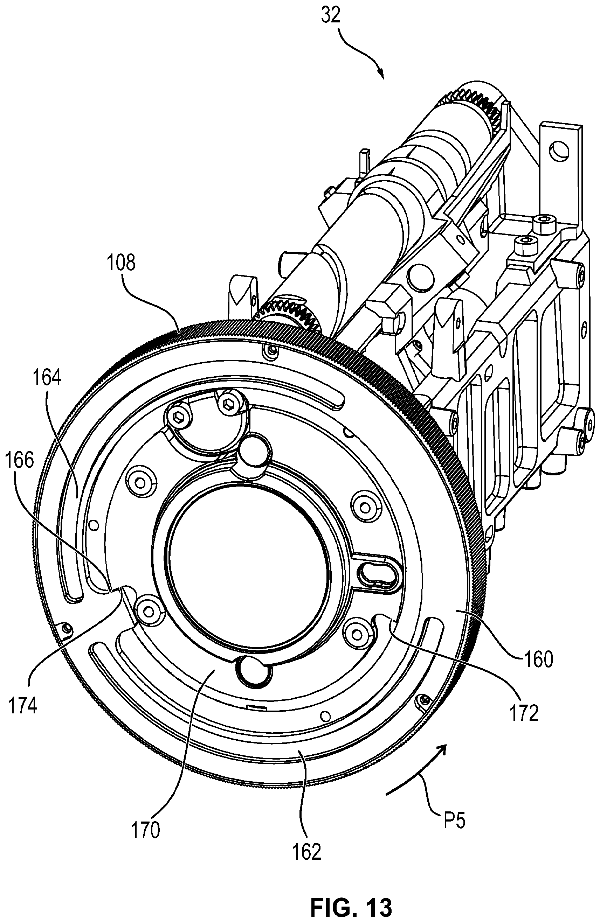

In den Figuren 12 und 13 ist jeweils eine schematische perspektivische Darstellung des Zoomsystems 32 gezeigt, wobei unterschiedliche Drehpositionen dargestellt sind.

An dem Drehrad 106 ist an der dem Objektivsystem 30 und somit dem Gehäuse 100 des Objektivsystems 30 zugewandten Seite drehfest eine Kulissenscheibe 160 angeordnet. In dieser Kulissenscheibe 160 sind zwei kreissegmentförmige Kulissen 162, 164 vorgesehen, in die die Stifte 130 bis 136 eingreifen können, sofern sie jeweils in der aktivierten Position angeordnet sind. Ferner weist die Kulissenscheibe 160 einen Vorsprung 166 auf, über den die Drehbarkeit des Drehrades 106 auf einen maximalen Drehbereich begrenzt ist. Hierzu sind an einem drehfesten Gehäuseteil 170, das nicht zusammen mit dem Drehrad 106 gedreht wird, zwei Anschläge 172, 174 vorgesehen.

Bei der in Figur 12 gezeigten Drehposition liegt der Vorsprung 166 an dem ersten Anschlag 172 an, so dass das Handrad nur in Richtung des Pfeiles P4 gedreht werden kann. Diese Position wird insbesondere als die Drehposition 0° bezeichnet.

In Figur 13 dagegen liegt der Vorsprung 166 an dem zweiten Anschlag 174 an, so dass das Handrad nur in Richtung des Pfeiles P5 gedreht werden kann, wobei diese Drehrichtung P5 der Drehrichtung P4 entgegengesetzt ist. In diesem zweiten Zustand ist das Drehrad 160 gegenüber der in Figur 12 gezeigten 0°-Position maximal verdreht. Dies entspricht insbesondere einer Drehung um den einen Winkel von 130°. Somit liegt der maximale Drehbereich des Handrades bei 130°. Durch diesen maximalen Drehbereich wird der Gesamt-Zoombereich vorgegeben.

Durch die Anordnung der Stifte 130 bis 136 in der aktivierten Position und den dadurch bewirkten Eingriff in eine der beiden Kulissen 162, 164 kann die Drehbarkeit des Drehrades 106 je nach eingesetztem Objektiv 44 beschränkt werden, so dass je nach Objektiv 44 das Handrad 106 nur in einem Teildrehbereich, der einen Teilbereich des maximalen Drehbereiches darstellt, gedreht werden kann. Über diese Teildrehbereiche wird entsprechend somit der Zoomteilbereich eingestellt, da eine Beschränkung des Drehbereiches des Handrades automatisch einer Beschränkung des zur Verfügung stehenden Zoombereiches bedeutet.

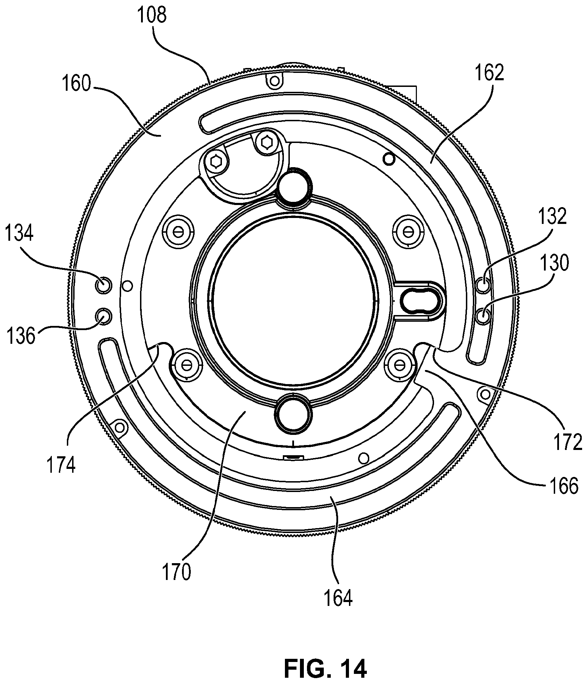

In den Figuren 14 bis 19 ist beispielhaft für ein Objektivsystem 30 mit drei unterschiedlichen Objektiven dargestellt, wie durch die unterschiedliche Anordnung der Stifte 130, 132 in der jeweils aktivierten bzw. deaktivierten Position durch die unterschiedliche Ausbildung der Kontaktelemente 150, 152 der verschiedenen Objektive für jedes der drei Objektive ein unterschiedlicher Teildrehbereich des Drehrades 106 festgelegt wird und somit ein unterschiedlicher Zoomteilbereich dem jeweiligen Objektiv zugeordnet wird.

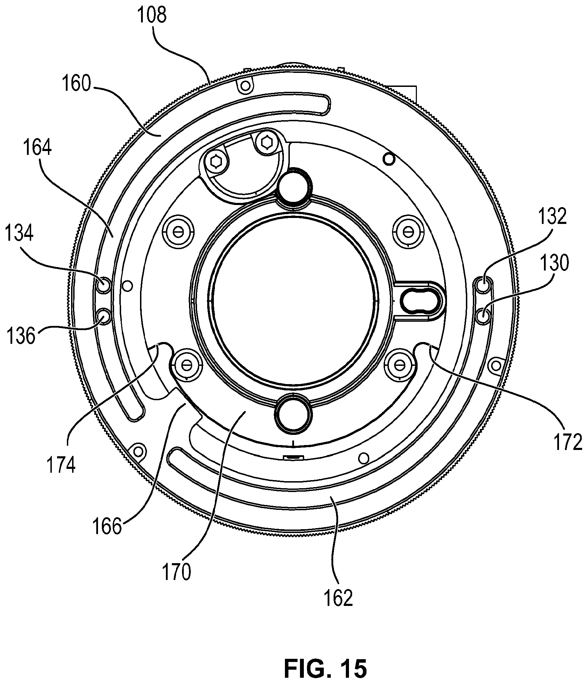

In den Figuren 14 und 15 ist die Situation dargestellt, die sich ergibt, wenn ein erstes Objektiv in dem Aufnahmebereich 102 eingesetzt ist, wobei bei diesem ersten Objektiv der Stift 132 in der aktivierten und die Stifte 130 bis 136 in der deaktivierten Position angeordnet sind. Wie in den Figuren 14 und 15 gezeigt, greift der Stift 132 somit in die Kulisse 162 ein. Hierbei kann das Handrad 106 zwischen der in Figur 14 gezeigten Drehposition 0° und der in Figur 15 gezeigten Drehposition 112° gedreht werden. Ein Drehen über 112° hinaus ist nicht möglich, da der Stift 132 gegen den Endbereich der Kulisse 162 stößt.

Alternativ könnten auch die anderen Stifte 130, 134, 136 in der aktivierten Position angeordnet sein. In diesem Fall würden die Stifte 134, 136 zunächst auf der Oberfläche der Kulissenscheibe 160 aufliegen und bei einem leichten Drehen aus der 0°-Position heraus dann in die Kulisse 164 einrasten. Ein Zurückbewegen in die Ausgangsposition wäre dann nicht möglich.

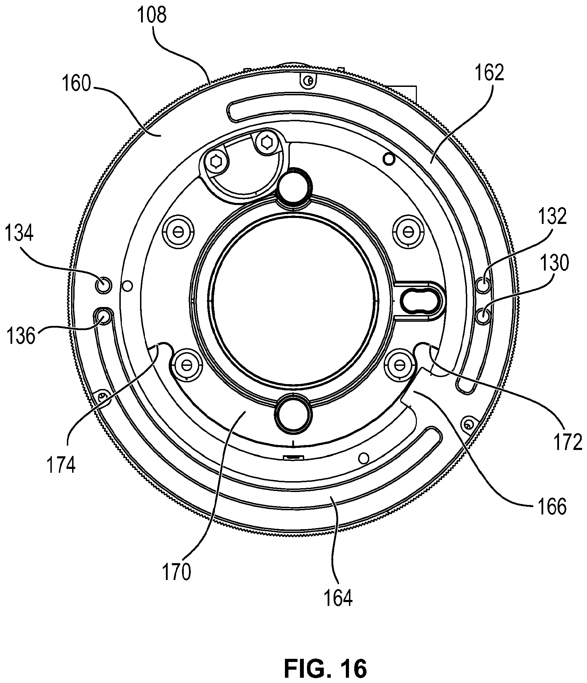

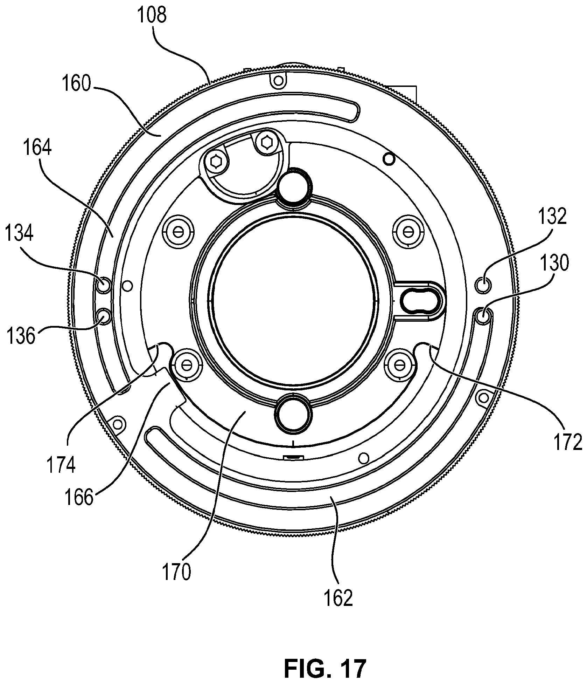

In den Figuren 16 und 17 wird die Situation dargestellt die sich ergibt, wenn ein zweites Objektiv statt dem ersten Objektiv in den Aufnahmebereich 102 eingeführt ist, wobei bei diesem zweiten Objektiv die Stifte 130, 136 in der aktivierten Position und die Stifte 132, 134 in der deaktivierten Position angeordnet sind. Über den Eingriff des Stiftes 136 in die Kulisse 164 wird die Drehbarkeit des Drehrades 106 bei dem zweiten Objektiv auf einen minimalen Drehwinkel von 9° begrenzt. Ein weiteres Drehen in Richtung P5, also auf die Drehposition 0° zu, ist nicht möglich.

In die entgegengesetzte Richtung P4 wird das Drehen durch den Eingriff des in der aktivierten Position angeordneten Stiftes 130 in die Kulisse 164 auf einen Drehwinkel von 121° begrenzt.

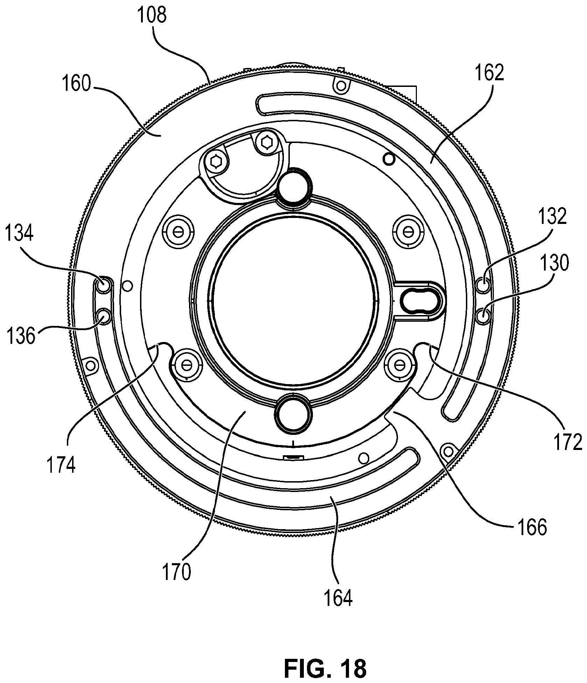

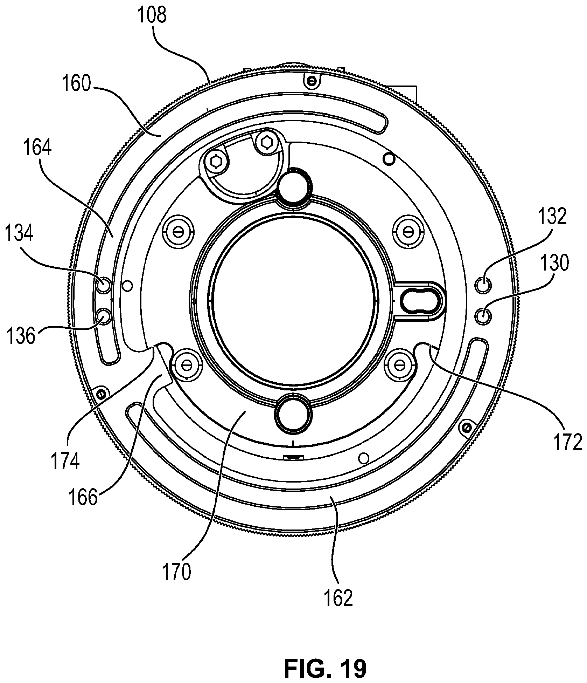

In den Figuren 18 und 19 ist die Situation gezeigt, die sich ergibt, wenn ein drittes Objektiv in den Aufnahmebereich 102 eingesetzt ist. Bei diesem dritten Objektiv sind die Kontaktelemente 150 und 152 derart ausgebildet, dass der Stift 134 in der aktivierten Position und die Stifte 130, 132, 134 in der deaktivierten Position angeordnet sind. Durch den Eingriff des Stiftes 134 in die Kulisse 164 wird die Drehbarkeit des Drehrades 106 in Richtung P5 auf 18° als minimalen Drehwinkel begrenzt. In die Richtung P4 dagegen kann das Drehrad 106 soweit gedreht werden, bis der Vorsprung 166 an den zweiten Anschlag 174 anstößt, also bis zu dem maximalen Drehwinkel von 130°.

Durch die zuvor beschriebene Anordnung mit den Stiften 130 bis 136 die in die entsprechenden Kulissen 162, 164 eingreifen, kann somit auf einfache Weise rein mechanisch die Drehbarkeit des Drehrades 106 je nach Objektiv 44 beschränkt werden, so dass jedem Objektiv 44 auf einfache Weise zuverlässig ein Zoomteilbereich innerhalb des Gesamt-Zoombereiches zugeordnet werden kann.

Bei einer alternativen Ausführungsform können auch mehr oder weniger als vier Stifte 130, 136 vorgesehen sein. Alternativ können auch mehr oder weniger als zwei Kulissen 162, 164 vorgesehen sein. Die Anzahl der Stifte und Kulissen kann insbesondere an die Anzahl der verschiedenen verwendeten Objektive und somit der Anzahl der verschiedenen notwendigen Zoomteilbereiche angepasst sein.

### Bezugszeichenliste

- 10: Mikroskop
- 12: Stativgrundkörper
- 14: Schwenkeinheit
- 16: Gehäuse
- 18: Objekttisch
- 20: Stellrad
- 30: Objektivsystem
- 32: Zoomsystem
- 34, 36, 38: Linsengruppe
- 40: Bilderfassungseinheit
- 42: Feldwinkel
- 44, 52: Objektiv
- 46, 48, 54, 56: Begrenzungselement
- 50: optische Achse
- 90: Gesamt-Zoombereich
- 92: Untere Grenze
- 94: Obere Grenze
- 96, 98: Zoomteilbereich
- 100: Gehäuse
- 102: Aufnahmebereich
- 104: Platte
- 106: Objektivgehäuse
- 108: Drehrad
- 110: Riffelung
- 112: Zahnung
- 114: Zahnradanordnung
- 116: Spindel
- 118, 120: Halteelement
- 130 bis 136: Stift
- 138: Oberfläche
- 140: Feder
- 142, 148: Stift
- 150, 152: Kontaktelement
- 154: Kontaktfläche
- 160: Kulissenscheibe
- 162, 164: Kulisse
- 166: Vorsprung
- 170: Gehäuseteil
- 172, 174: Anschlag
- P1 bis P5: Richtung

## Patentansprüche

1. Mikroskop umfassend:
ein Objektivsystem (30), das mindestens zwei wahlweise in den Strahlengang einbringbare Objektive (44, 52) mit unterschiedlichen Brennweiten aufweist, und
ein Zoomsystem (32), das einen Gesamt-Zoombereich (90) aufweist,
wobei sich die jeweilige Gesamtvergrößerung eines zu mikroskopierenden Objektes jeweils aus der Brennweite des gewählten Objektivs (44, 52) und der innerhalb des Gesamt-Zoombereichs (90) eingestellten Vergrößerung des Zoomsystems (32) ergibt,
**dadurch gekennzeichnet, dass**
jedem der Objektive (44, 52) ein unterschiedlicher Zoomteilbereich (96, 98) innerhalb des Gesamt-Zoombereichs (90) zugeordnet ist, wobei der zugeordnete Zoombereich (96, 98) jedes der Objektive (44, 52) kleiner als der Gesamt-Zoombereich (90) ist, und
dass Begrenzungsmittel (46, 48, 54, 56) vorhanden sind, durch die die Verstellbarkeit des Zoomsystems (32) jeweils auf den Zoomteilbereich (96, 98) begrenzt ist, der dem ausgewählten Objektiv (44, 52) zugeordnet ist,
dass als Begrenzungsmittel an jedem Objektiv (44, 52) mindestens ein Anschlag (46, 48, 54, 56) vorgesehen ist, und dass durch den Anschlag (46, 48, 54, 56) die Verstellbarkeit des Zoomsystems (32) auf den jeweiligen Zoomteilbereich (96, 98) begrenzt ist.

2. Mikroskop (10) nach einem der vorhergehenden Ansprüche, **dadurch gekennzeichnet, dass** sich die Zoomteilbereiche (96, 98) mindestens zweier Objektive (44, 52) zumindest teilweise überschneiden.

3. Mikroskop (10) nach einem der vorhergehenden Ansprüche, **dadurch gekennzeichnet, dass** die unteren und oberen Grenzen der Zoomteilbereiche (96, 98) jeweils derart gewählt sind, dass sich bei den verschiedenen Zoomteilbereichen (96, 98) zwischen der jeweiligen unteren und oberen Grenze jeweils der gleiche vorbestimmte Zoomfaktor ergibt.

4. Mikroskop (10) nach einem der vorhergehenden Ansprüche, **dadurch gekennzeichnet, dass** die untere Grenze mindestens eines Zoomteilbereichs (96) der unteren Grenze (92) des Gesamt-Zoombereichs (90) und die obere Grenze mindestens eines anderen Zoomteilbereichs (98) der oberen Grenze (94) des Gesamt-Zoombereichs (90) entspricht.

5. Mikroskop (10) nach einem der vorhergehenden Ansprüche, **dadurch gekennzeichnet, dass** die Zoomteilbereiche (96, 98) derart voreingestellt sind, dass der Zoomteilbereich (96) eines Objektivs (44) mit einer Brennweite, die größer ist als die Brennweite eines anderen Objektivs (52), Vergrößerungen umfasst, die kleiner sind als die kleinste Vergrößerung des Zoomteilbereiches (98) dieses anderen Objektivs (52).

6. Mikroskop (10) nach einem der vorhergehenden Ansprüche, **dadurch gekennzeichnet, dass** die Zoomteilbereiche (96, 98) derart voreingestellt sind, dass der Zoomteilbereich (98) eines Objektivs (52) mit einer Brennweite, die kleiner ist als die Brennweite eines anderen Objektivs (44), Vergrößerungen umfasst, die größer sind als die größten Vergrößerung des Zoomteilbereiches (96) dieses anderen Objektivs (44).

7. Mikroskop (10) nach einem der vorhergehenden Ansprüche, **dadurch gekennzeichnet, dass**
- das Objektivsystem (30) ein erstes Objektiv (44) mit einer ersten Brennweite und ein zweites Objektiv (52) mit einer zweiten Brennweite aufweist, wobei die zweite Brennweite kleiner als die erste Brennweite ist,
- dass die untere Grenze des dem ersten Objektivs (44) zugeordneten ersten Zoomteilbereichs mit der unteren Grenze des Gesamt-Zoombereichs übereinstimmt, und
dass die obere Grenze des dem zweiten Objektivs (56) zugeordneten zweiten Zoomteilbereichs mit der oberen Grenze des Gesamt-Zoombereichs übereinstimmt.

8. Mikroskop (10) nach einem der vorhergehenden Ansprüche, **dadurch gekennzeichnet, dass** eine Blende zum Einstellen des Lichtdurchlasses in Abhängigkeit des jeweils gewählten Objektivs (44, 52) und/oder der eingestellten Brennweite des Zoomsystems (32) vorgesehen ist.

9. Mikroskop (10) nach einem der vorhergehenden Ansprüche, **dadurch gekennzeichnet, dass** das Zoomsystem (32) mindestens zwei Linsengruppen (34 bis 38) aufweist, von denen mindestens eine zum Einstellen der Brennweite des Zoomsystems (32) in Richtung der optischen Achse (50) bewegbar ist.

10. Mikroskop (10) nach einem der vorhergehenden Ansprüche, **dadurch gekennzeichnet, dass** das Mikroskop (10) eine digitales Mikroskop ist, das eine Bilderfassungseinheit (40) aufweist, auf der ein Bild des zu mikroskopierenden Objekts mit Hilfe des Zoomsystems (32) abbildbar ist.

## Claims

1. Microscope comprising:
a lens system (30), which has at least two lenses (44, 52) with different focal lengths that can be optionally brought into the optical path, and
a zoom system (32) having an overall zoom range (90),
wherein the respective total magnification of an object to be examined microscopically depends on the focal length of the selected lens (44, 52) and the magnification of the zoom system (32) respectively set within the overall zoom range (90),
**characterized in that**
each of the lenses (44, 52) is assigned a different zoom sub-range (96, 98) within the overall zoom range (90), wherein the associated zoom sub-range (96, 98) of each of the lenses (44, 52) is smaller than the overall zoom range (90), and
that limiting means (46, 48, 54, 56) are provided through which the adjustment of the zoom system (32) is limited to the zoom sub-range (96, 98) associated with the selected lens (44, 52),
that at least one stop (46, 48, 54, 56) is provided as a limiting means on each lens (44, 52), and that the stop (46, 48, 54, 56) limits the adjustment of the zoom system (32) to the respective zoom sub-range (96, 98).

2. Microscope (10) according to one of the preceding claims, **characterized in that** the zoom sub-ranges (96, 98) of at least two lenses (44, 52) at least partially overlap.

3. Microscope (10) according to any one of the preceding claims, **characterized in that** the lower and upper limits of the zoom sub-ranges (96, 98) are each so selected that in the different zoom sub-ranges (96, 98) the same predetermined zoom factor respectively results between the respective lower and upper limits.

4. Microscope (10) according to one of the preceding claims, **characterized in that** the lower limit of at least one zoom sub-range (96) corresponds to the lower limit (92) of the overall zoom range (90), while the upper limit of at least one other zoom sub-range (98) corresponds to the upper limit (94) of the overall zoom range (90).

5. Microscope (10) according to one of the preceding claims, **characterized in that** the zoom sub-ranges (96, 98) are preset so that the zoom sub-range (96) of a lens (44) having a focal length that is greater than the focal length of another lens (52) has magnifications that are smaller than the smallest magnification of the zoom sub-range (98) of the other lens (52).

6. Microscope (10) according to one of the preceding claims, **characterized in that** the zoom sub-ranges (96, 98) are preset so that the zoom sub-range (98) of a lens (52) having a focal length which is smaller than the focal length of another lens (44) has magnifications that are greater than the greatest magnification of the zoom sub-range (96) of the other lens (44).

7. Microscope (10) according to any one of the preceding claims, **characterized in that**
- the lens system (30) has a first lens (44) with a first focal length and a second lens (52) with a second focal length, wherein the second focal length is smaller than the first focal length,
- the lower limit of the first zoom sub-range associated with the first lens (44) coincides with the lower limit of the total zoom range, and
- the upper limit of the second zoom sub-range associated with the second lens (56) coincides with the upper limit of the total zoom range.

8. Microscope (10) according to any one of the preceding claims, **characterized in that** a shutter is provided to adjust the light transmission as a function of the respective selected lens (44, 52) and/or the set focal length of the zoom system (32).

9. Microscope (10) according to one of the preceding claims, **characterized in that** the zoom system (32) has at least two groups of sensors (34 to 38), at least one of which may be moved to adjust the focal length of the zoom system (32) in the direction of the optical axis (50).

10. Microscope (10) according to any one of the preceding claims, **characterized in that** the microscope (10) is a digital microscope with an image detection unit (40), on which an image of the object to be examined microscopically can be presented by means of the zoom system (32).

## Revendications

1. Microscope comprenant :
un système d'objectif (30) qui comprend au moins deux objectifs (44, 52) pouvant être placés au choix dans le trajet de rayon, avec des focales différentes, et
un système de zoom (32) qui comprend une plage de zoom totale (90),
l'agrandissement global d'un objet à observer au microscope résultant de la focale de l'objectif (44, 52) sélectionné et de l'agrandissement du système de zoom (32) réglé à l'intérieur de la plage de zoom totale (90),
**caractérisé en ce que**
à chacun des objectifs (44, 52) correspond une plage de zoom (96, 98) différente à l'intérieur de la plage de zoom totale (90), la plage de zoom (96, 98) correspondante de chacun des objectifs (44, 52) étant inférieure à la plage de zoom totale (90) et
des moyens de limitation (46, 48, 54, 56) sont prévus, qui permettent de limiter la capacité de réglage du système de zoom (32) à la plage de zoom (96, 98) correspondant à l'objectif (44, 52) sélectionné,
le moyen de limitation utilisé sur chaque objectif (44, 52) est au moins une butée (46, 48, 54, 56) et **en ce que** la butée (46, 48, 54, 56) permet de limiter la capacité de réglage du système de zoom (32) à la plage de zoom (96, 98) correspondante.

2. Microscope (10) selon l'une des revendications précédentes, **caractérisé en ce que** les plages de zoom (96, 98) d'au moins deux objectifs (44, 52) se croisent au moins partiellement.

3. Microscope (10) selon l'une des revendications précédentes, **caractérisé en ce que** les limites inférieures et supérieures des plages de zoom (96, 98) sont choisies de façon à obtenir, dans les différentes plages de zoom (96, 98), le même facteur de zoom prédéterminé entre les limites inférieure et supérieure.

4. Microscope (10) selon l'une des revendications précédentes, **caractérisé en ce que** la limite inférieure d'au moins une plage de zoom (96) correspond à la limite inférieure (92) de la plage de zoom totale (90) et la limite supérieure d'au moins une autre plage de zoom (98) correspond à la limite supérieure (94) de la plage de zoom totale (90).

5. Microscope (10) selon l'une des revendications précédentes, **caractérisé en ce que** les plages de zoom (96, 98) sont pré-réglées de façon à ce que la plage de zoom (96) d'un objectif (44) avec une focale supérieure à la focale d'un autre objectif (52) comprenne des agrandissements inférieurs à l'agrandissement le plus faible de la plage de zoom (98) de cet autre objectif (52).

6. Microscope (10) selon l'une des revendications précédentes, **caractérisé en ce que** les plages de zoom (96, 98) sont pré-réglées de façon à ce que la plage de zoom (98) d'un objectif (52) avec une focale inférieure à la focale d'un autre objectif (44) comprenne des agrandissements supérieurs à l'agrandissement le plus élevé de la plage de zoom (96) de cet autre objectif (44).

7. Microscope selon l'une des revendications précédentes, **caractérisé en ce que**
- le système d'objectif (30) comprend un premier objectif (44) avec une première focale et un deuxième objectif (52) avec une deuxième focale, la deuxième focale étant inférieure à la première focale,
- la limite inférieure de la première plage de zoom correspondant au premier objectif (44) coïncide avec la limite inférieure de la plage de zoom totale et
- la limite supérieure de la deuxième plage de zoom correspondant au deuxième objectif (56) coïncide avec la limite supérieure de la plage de zoom totale.

8. Microscope (10) selon l'une des revendications précédentes, **caractérisé en ce qu'**un diaphragme est prévu pour le réglage du passage de la lumière en fonction de l'objectif (44, 52) choisi et/ou de la focale réglée du système de zoom (32).

9. Microscope (10) selon l'une des revendications précédentes, **caractérisé en ce que** le système de zoom (32) comprend au moins deux groupes de lentilles (34 à 38) dont au moins un est mobile en direction de l'axe optique (50) pour le réglage de la focale du système de zoom (32).

10. Microscope (10) selon l'une des revendications précédentes, **caractérisé en ce que** le microscope (10) est un microscope numérique qui comprend une unité de capture d'image (40) sur laquelle une image de l'objet à observer au microscope peut être représentée à l'aide du système de zoom (32).
